# EUROPEAN PATENT SPECIFICATION

(11) **EP 2 596 175 B1**
(45) Date of publication and mention of the grant of the patent: **15.04.2015**
(21) Application number: 11749916.0
(22) Date of filing: 11.07.2011
(51) Int. Cl.: E02B 9/08

(54) **WAVES COLLECTION APPARATUS FOR ELECTRICITY PRODUCTION BY MEANS OF HYDRAULIC TURBINES AND CURRENT GENERATORS**
WELLENENERGIEGEWINNUNGSVORRICHTUNG ZUR ENERGIEPRODUKTION ANHAND VON HYDRAULISCHEN TURBINEN UND STROMGENERATOREN
DISPOSITIF DE COLLECTE DE VAGUES DESTINÉ À LA PRODUCTION D'ÉLECTRICITÉ AU MOYEN DE TURBINES HYDRAULIQUES ET DE GÉNÉRATEURS D'ÉLECTRICITÉ

(30) Priority: 20.07.2010 IT BR20100004
(43) Date of publication of application: 29.05.2013
(73) Proprietor: Global Engineering Constructions SRL, 72100 Brindisi (IT)
(72) Inventor: MAELLARO, Giulio Teodoro, I-72100 Brindisi (IT); MAELLARO, Vito Mosè, I-72100 Brindisi (IT); MAELLARO, Cosimo, I-72100 Brindisi (IT); FRASCINO, Felice, I-72100 Brindisi (IT); FRASCINO, Antonio, I-72100 Brindisi (IT)
(74) Representative: Bruni, Giovanni
(86) International application number: PCT/IB2011/053091
(87) International publication number: WO 2012/011018

(56) References cited:
- WO-A2-2008/072241
- GB-A- 2 445 945
- GB-A- 2 451 627
- US-A- 1 868 087

## Description

The present invention pertains to the field of the exploitation of renewable and sustainable energy of the sea waves, even of low ones; the aim of the present invention is to produce electric energy with features such that the inlet in a transmission electrical power network is allowed, although the main source generating it is highly irregular. Alternatively, the electric energy produced by means of the inventive object can be used for supplying accumulation forms of energy, such for example the hydrogen production, by means of water electrolysis or other process known at the state of the art.

In the state of the art, there are known systems for capturing the energy of the waves, in particular of the great oceanic waves, which apply systems and principles other than the inventive object and which, therefore, are not suitable to be applied for exploiting the irregular and low waves.

The document US 1868087, for example, describes a system for capturing the energy of sea waves, where it is provided a turbine positioned on the average calm sea level.

The document DE3029087 describes a hydroelectric system comprising a barrier positioned on the average sea level allowing the accumulation of water so that it results a reduced hydraulic gap.

The system comprises some canalizations and a turbo-generator unit which exploits such hydraulic gap.

The document WO2008/072241 describes a system for lifting and so accumulating the water transported by the waves to a level higher than the average one of the calm sea and subsequently for exploiting the potential and kinetic energy in turbine. In particular, this document discloses the following features of claim 1: an apparatus for generating energy from the sea waves comprising: at least a tank provided of a wall with openings provided with means able to capture the water of the waves breaking thereon, thus allowing its inlet and avoiding its outlet so that the free level of water accumulated in the tank is at an height higher than the one of the calm sea; at least a communication duct between the tank and the sea, passing across the tank wall opposed to the one equipped for capturing the waves, configured in such a way that the water accumulated in said tank is discharged in a sea section not exposed to the direct action of the waves.

The applications known in the state of the art are limited since they do not allow to exploit low waves, which form in low tide conditions and which are very irregular. It is important to exploit this kind of wave motion since it is the kind of wave motion which is provided in many situations, and in particular in systems positioned near the coast, close to tidal barriers or breakwater barriers as it will better described in the following. It is not needed to be underlined that the systems positioned near the coast are those which provide, for clear proximity reasons, the lowest costs of installation, connection and maintenance.

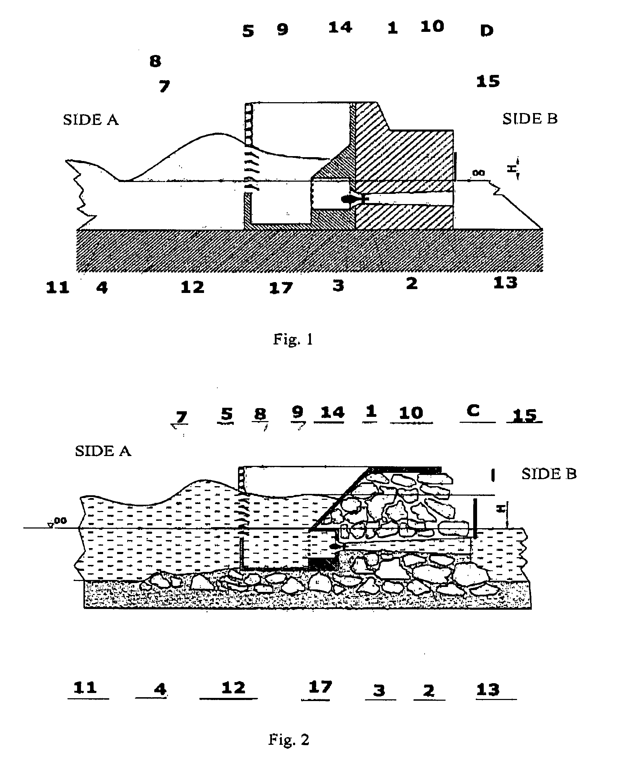

Aim of the present invention is therefore to provide an apparatus for capturing the energy contained in the sea waves, which is particularly efficient for exploiting the irregular and low waves as well. This and other advantages will be clear from the following description of the present invention which refers to the accompanying figures 1 - 3.
Figure 1 shows a side section view of the apparatus of the present invention arranged close to a tidal barrier,
Figure 2 shows a side section view of the apparatus of the present invention arranged close to a breakwater barrier;
Figure 3 shows an axonometric view of the apparatus according to the present invention.

As it is shown in figure 1, the apparatus object of the present invention comprises at least a tank (1) able to capture the water of the sea waves. According to a preferred embodiment, such a tank can be positioned close to and on the outer side of tidal barriers (D) or breakwater barriers (C). The tanks (1) can be positioned directly near the barrier (D) or breakwater barrier (C), as it is shown in figures 1 and 2, or at a certain distance, in parallel to the same barrier or the breakwater barrier.

The tidal barriers (D) are those marine structures realized for the protection of harbours; they are structures in concrete and separate the calm sea (side B), as it is protected by the same barrier, from the open sea (side A) which, in favourable conditions, can be rough sea. Analogously the breakwater barriers (C) are those marine structures realized with an assembly of rocks arranged in parallel to the shore, functioning as protection of the littoral from the erosion of the surges, separating the calm sea (side B) as it is protected by the same barrier from the open sea (side A).

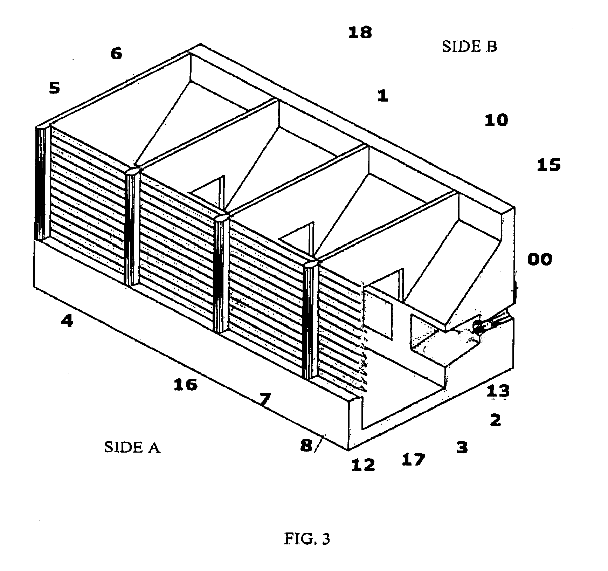

The tanks can be also arranged isolated, in parallel and at a suitable distance from the coast for the protection of the littoral from the erosion of surges, thus being also able to function as protection of the coast, which is generally peculiar to the tidal barriers or the breakwater barriers, as it is shown in figure 3. With the tanks in isolated position, it is provided a separation between the calm sea (side B), as it is protected by the same tank, and the open sea (side A) .

In each of the described embodiments, the tank (1) comprised in the apparatus according to the present invention is always in an interposed position between two opposed sea sections, the one (side A) characterized by the presence of waves coming from the open sea, the other (side B) by the absence of waves as it is positioned on the side protected by the same tank (1) or by the tidal barrier (D) or by the breakwater barrier (C).

For a natural phenomenon, according to which the lines perpendicular to the wave front are mainly perpendicular to the coast line too, it results that the side A towards the open sea of the tanks is mainly parallel to the wave front. The side B, opposed to the side A, faces a surface of calm sea as it is protected by the same marine structure. The wall of the tank (1) facing the side A is equipped to allow to capture the water of the waves breaking thereon allowing the inlet in the tank of the water transported thereby and avoiding its outlet. Due to this functioning mode, the tank supply is episodic and inconstant, and occurs in concomitance with the wave breaking. With regards to the tank positioning, the wave breaking occurs as the same time along the whole wall interested by the wave front.

The water captured in the tanks accumulates with its potential energy at an height (H) higher than the free "calm sea" level arranged on the side B. The potential energy contained in the water accumulation thus created can be so exploited to produce electric energy by actuating hydraulic turbines (2), which are coupled to current generators (3), and put in motion by the transfer of water accumulated by the accumulation tank (1) in the surface of calm sea arranged on the side B. The tank (1) is supplied by filling itself when the wave comes, to tend then to empty itself before the next wave arrives. Inside the tank, the hydraulic head is continually variable and so it is equally variable the water flow crossing the turbines and as a consequence also the characteristic parameters of the electric energy produced notwithstanding the presence of suitable flywheels change. The electric energy produced can be input in the net only upon stabilization or used to produce hydrogen.

To optimize the system functioning in each tank (1), it can be conveniently provided a proper number of discharge ducts (13), in each of which being installed a turbine (3) so that it is possible to adjust, in certain limits, the flow rate supplying each turbine (3) bu opening and closing a portion of the discharge ducts (13) according to the inlet flow rate in the tank (1) which in turn depends on the height of the waves. The number of the active discharge ducts is to selected such that the tank is allowed to be almost completely emptied between a wave and the other one. The number of functioning turbines is then related to the sea condition.

According to a preferred, not limiting embodiment of the possible applications of the present invention, the tanks (1) can be ballasted, variable in width in proportion to the height and in particular can be divergent upwards, as it is shown in the section views of figures 1 and 2 and 3. As a way of example, the tanks can be long between 4.00 and 8.00 m at the average level of the free "calm sea" in low tide condition (indicated by the symbol 00 in figures 1, 2 and 3). The tanks (1) can be realized in concrete or other suitable material possibly provided with suitable coatings, realized as independent modules, between 40.00 and 50.00 m long each.

As it is said, the capturing wall of the tank exposed to the waves is equipped to allow the water inlet but not the water outlet. Conveniently this wall can be realized in two portions: the lower portion (4) immersed both in calm sea condition and low tide condition, can be realized in concrete as the remaining portion of the tank (1), while the portion which is not immersed (5) in calm sea and low tide condition is made up of a series of independent panels (16), indicatively between 5 and 6 m long. The upper edge of the immersed portion (4) of the wall of the tank (1) is positioned so that it is immersed, for example at a depth approximately between 1.00 and 1.50 m, also in low tide condition. As a consequence, the lower portion of the capturing wall formed by panels (16) is always immersed as well.

The panels (16) of the capturing wall can be conveniently realized in steel or composite material, can be arranged in vertical or inclined position and be constrained to the supporting structures of the tank (1) by means of guides (6) able to allow the extraction of the same panels for cleaning and maintenance purposes.

Each panel, suitably dimensioned to resist to the stresses deriving from its usage, is provided with openings (7) developing horizontally which make up the gaps through which the water of the sea waves goes into the tank. These openings (7) can be conveniently of length equal to the maximum one allowed by the length of the same panel and of length for example between 40 and 60 cm.

The openings (7) are provided on the whole development of the panel. Each opening (7) is provided with a movable element (8) able to close the corresponding opening (7). Such a movable element (8) can be realized by means of a movable sluice gate (8) constrained to the panel (16) at the respective gap by means of hinges (9) arranged in the upper portion of the sluice gate (8) such that the sluice gate (8) can swing inwards the tank (1), but not outwards of the same. In absence of outer stresses, the sluice gate (8) takes spontaneously the vertical or almost vertical position corresponding to the closing position of the respective gap (7) in the panel (16).

As it is described, the apparatus made up of panels (16) having openings (7) closed by the movable sluice gates (8), allows to receive the water transported by the waves, but not to let it going out. In practice the movable sluice gates (8) function as check valves for the water of the waves.

The seabed (11) near the tanks, in case of low seabed, can be shaped according to an inclined plane which from the natural floor goes to the upper edge of the immersed portion (4) of the wall of the tank exposed to the waves (side A) in order to exalt the kinematic portion of the energy of the sea waves.

The wall (10) opposed to the capturing wall, as for the portion emerging at the calm sea level, can be conveniently realized inclined following the linear or curvilinear profile so that the tank width is divergent with the height. As a way of example, the wall (10) can be inclined, following a linear profile, for a height of at least 2.50 m with an angle between 45° and 30° with respect to the horizontal. The portion of the wall (10) which is on the inclined portion, can be inclined as well or it can be realized vertical indifferently.

In the rear portion (10) of the tank (1) at discrete intervals there are realized communication ways with the sea surface protected by the waves of the same tank (1). Such communication ways comprise recesses (17) provided with extractable vertical grids (12), from each of them an immersed duct (13), with convergent-divergent geometry, departing in orthogonal direction to the tank direction. The duct goes out from the tank going into the calm sea surface arranged on the side B, if present crossing the body of the tidal barrier (D) or the body of the breakwater barrier (C). Inside the duct (13), at the restricted section, there is the impeller of a hydraulic turbine (2), directly coupled to an axis-generator of tight kind (3).

Conveniently the duct can be provided at the mouth with suitable closing gate which is to be actuated if needed, which, inhibiting the water passage allows to inactivate the same turbine. This allows to adapt the number of the supplied turbines (2) in relation to the sea condition.

The tank immersed bottom is to be found at a distance of at least 1.00 - 1.50 m with respect to the lower edge of the discharge duct to contain the possible sand accumulation.

The tank can be stiffened by transverse buttresses (18) in concrete, positioned in the upper end of the tank, which connect the two longitudinal walls at the structures where the guides (6) are housed, which constrain the panels (16) located on the capturing wall.

Suitable buildings, not necessarily immediately near, can be conveniently realized at the system disposal to house all the apparatuses for controlling and managing the same system, as well as for controlling the energy flow produced and the possible hydrogen production.

Finally, the apparatus according to the present invention is advantageous with respect to the applications known in the state of the art in that it allows to discharge the fluid in a substantially calm section of sea, whose height can be considered constant. Such advantage is obtained by positioning the tank such that the same is in an interposed position between two sea opposed sections, the one (side A) being characterized by the presence of waves coming from the open sea, the other one (side B) by the absence of waves as it is arranged on the side protected by the same tank (1) or by the tidal barrier (D) or by the breakwater barrier (C).

Moreover the positioning the apparatus under the calm sea level in low tide condition allows to exploit the low waves as well which arrive in low tide condition as well, thus increasing the functioning times of the system.

These and other advantages are obtained by means of an apparatus for capturing the energy of the sea waves as defined in the following claims.

## Claims

1. Apparatus for generating energy from the sea waves comprising:
- at least a tank (1) provided of a wall with openings (7) provided with means (8) able to capture the water of the waves breaking thereon, thus allowing its inlet and avoiding its outlet so that the free level (14) of water accumulated in the tank (1) is at an height higher than the one of the calm sea;
- at least a communication duct (13) with convergent-divergent geometry between the tank (1) and the sea, passing across the tank wall opposed to the one equipped for capturing the waves, configured in such a way that the water accumulated in said tank (1) is discharged in a sea section not exposed to the direct action of the waves;
- one or more turbines (2) positioned inside said duct for exploiting the potential energy of the water accumulated in the tank (1) to produce electric energy;
and whereby said wall with openings (7) provided with means (8) able to capture the water of the waves breaking thereon is mainly parallel to the wave front and said ducts (13) depart in a direction orthogonal to the tank direction, which direction is orthogonal to the wall with openings (7).

2. Apparatus according to claim 1, **characterized in that** the tank is arranged close to the tidal barriers on the outer side exposed to the surges, positioned or directly near to the barrier (D) or at a certain distance, in parallel to the same barrier.

3. Apparatus according to claim 1, **characterized in that** the tank is arranged close to the breakwater barriers on the outer side exposed to the surges, positioned or directly near to the breakwater barriers (C) or at a certain distance, in parallel to the same breakwater barrier.

4. Apparatus according to claim 1, **characterized in that** the tank is in isolated position to protect the coast, in parallel and at distance from the coast.

5. Apparatus according to any one of the preceding claims, **characterized in that** said means (8) able to capture the water of the waves breaking thereon, thus allowing its inlet and avoiding its outlet, comprise movable sluice gates (8) hinged to the upper portion.

6. Apparatus according to claim 5, **characterized in that** each movable sluice gate (8) opens automatically the corresponding gap (7) under the effect of the action of the wave water arriving and closes automatically the corresponding gap (7) under the effect of its proper weight and of the action of the water which tends to go out from the gap.

7. Apparatus according to claim 5 or 6, **characterized in that** the gaps (7) are realized on independent panels (16) to which the movable sluice gates (8) closing said gaps (7) are hinged.

8. Apparatus according to any one of the preceding claims, **characterized in that** the panels (16) to which said means (8) able to capture the water of the waves breaking thereon thus allowing its inlet in the tank 1 and avoiding its outlet are hinged, are movable and constrained to the supporting structure of the tank (1) by means of guides (6) for directing the motion when the same panels are lifted.

9. Apparatus according to any one of the preceding claims, **characterized in that** the longitudinal wall of the tank not exposed to the waves diverges upwards with respect to the capturing wall, following a linear or curvilinear profile.

## Patentansprüche

1. Apparat zur Erzeugung von Energie aus Meereswellen, bestehend aus:
- mindestens einem Tank (1), versehen mit einer Wand mit Öffnungen (7), versehen mit einer Vorrichtung (8) zur Aufnahme des Wassers der Wellen, die sich daran brechen, sodass ein Ein-, aber kein Abfluss des Wassers ermöglicht wird und der freie Wasserstand (14) im Tank (1) höher ist als der Wasserstand der ruhigen Meeresoberfläche;
- mindestens einem Führungskanal (13) mit konvergent-divergenter Geometrie zwischen dem Tank (1) und dem Meer, welcher den Tank durchläuft und gegenüber dem Kanal für die Aufnahme der Wellen verläuft und so konfiguriert ist, dass das im Tank (1) angesammelte Wasser in einen Bereich des Meeres abgelassen wird, der nicht der direkten Wirkung der Wellen ausgesetzt ist;
- einer oder mehreren Turbine(n) (2) innerhalb des erwähnten Kanals, welche die potenzielle Energie des im Tank (1) angesammelten Wassers zur Erzeugung von elektrischer Energie nutzt/nutzen;
und woran
die besagte Wand mit Öffnungen (7) und der Vorrichtung (8) zur Aufnahme des Wassers der Wellen, die sich daran brechen, vorwiegend senkrecht zur Wellenfront verläuft und die besagten Kanäle (13) in eine Richtung orthogonal zur Tankrichtung verlaufen, welche orthogonal zur Wand mit Öffnungen (7) verläuft.

2. Apparat gemäß Anspruch 1, **dadurch gekennzeichnet, dass** sich der Tank nahe bei der Wellenbarriere auf der Außenseite befindet, die den Wellen ausgesetzt ist, in direkter Nähe oder in einem gewissen Abstand zu der Barriere (D) positioniert ist und parallel zu ihr verläuft.

3. Apparat gemäß Anspruch 1, **dadurch gekennzeichnet, dass** sich der Tank nahe bei der Brandungsbarriere auf der Außenseite befindet, die den Wellen ausgesetzt ist, in direkter Nähe oder in einem gewissen Abstand zu der Brandungsbarriere (C) positioniert ist und parallel zu ihr verläuft.

4. Apparat gemäß Anspruch 1, **dadurch gekennzeichnet, dass** der Tank zum Schutz der Küste isoliert, parallel und in ausreichender Entfernung zur Küste positioniert ist.

5. Apparat gemäß einem der vorangegangenen Ansprüche, **dadurch gekennzeichnet, dass** besagte Vorrichtung (8) zur Aufnahme des Wassers der Wellen, die sich daran brechen, sodass ein Ein-, aber kein Abfluss des Wassers ermöglicht wird, über bewegliche Schleusen (8) verfügt, die im oberen Bereich angebracht sind.

6. Apparat gemäß Anspruch 5, **dadurch gekennzeichnet, dass** jede bewegliche Schleuse (9) unter Einwirkung der Wellen automatisch die jeweilige Öffnung (7) öffnet und unter Einwirkung ihres Eigengewichts und des Wassers, das von der Innenseite des Tanks zu entweichen versucht, automatisch die jeweilige Öffnung (7) schließt.

7. Apparat gemäß den Ansprüchen 5 und 6, **dadurch gekennzeichnet, dass** die Öffnungen (7) in unabhängige Platten (16) eingelassen sind, an denen die beweglichen Schleusen (8), die diese Öffnungen (7) schließen, angebracht sind.

8. Apparat gemäß einem der vorangegangenen Ansprüche, **dadurch gekennzeichnet, dass** die Platten (16), an denen besagte Vorrichtungen (8) zur Aufnahme des Wassers der sich daran brechenden Wellen in den Tank (1), sodass ein Ein-, aber kein Abfluss des Wassers ermöglicht wird, angebracht sind, beweglich und mittels Führungen (6) an der Tragstruktur des Tanks (1) befestigt sind, welche die Bewegung beim Abheben der Platten vorgeben.

9. Apparat gemäß einem der vorangegangenen Ansprüche, **dadurch gekennzeichnet, dass** die Längsseite des Tanks, die nicht den Wellen ausgesetzt ist, im Verhältnis zur aufnehmenden Wand gemäß einem linearen oder kurvenförmigen Profil nach oben divergiert.

## Revendications

1. Dispositif pour produire de l'énergie à partir des vagues comprenant :
- au moins un réservoir (1) présentant une paroi munie d'ouvertures (7) pourvues de moyens (8) capables de capter l'eau des vagues qui se brisent dessus, permettant ainsi son entrée et empêchant sa sortie de sorte que le niveau libre (14) d'eau accumulée dans le réservoir (1) se trouve à une hauteur supérieure à celle de la mer calme ;
- au moins une conduite de communication (13) avec géométrie convergente-divergente entre le réservoir (1) et la mer, passant à travers la paroi du réservoir opposée à celle équipée pour capter les vagues, configurée de telle sorte que l'eau accumulée dans ledit réservoir (1) est évacuée dans une portion de mer non exposée à l'action directe des vagues ;
- une ou plusieurs turbines (2) positionnées à l'intérieur de ladite conduite pour exploiter l'énergie potentielle de l'eau accumulée dans le réservoir (1) afin de produire de l'énergie électrique ;
et dans lequel ladite paroi munie d'ouvertures (7) pourvues de moyens (8) capables de capter l'eau des vagues qui se brisent dessus est essentiellement parallèle au front de vague et lesdites conduites (13) partent dans une direction orthogonale à la direction du réservoir, laquelle direction est orthogonale à la paroi munie d'ouvertures (7).

2. Dispositif selon la revendication 1, **caractérisé en ce que** le réservoir est aménagé à proximité des barrières contre les inondations sur la face extérieure exposée à la houle, positionné soit directement à proximité de la barrière (D) soit à une certaine distance, parallèlement à cette même barrière.

3. Dispositif selon la revendication 1, **caractérisé en ce que** le réservoir est aménagé à proximité des barrières brise-lames sur la face extérieure exposée à la houle, positionné soit directement à proximité de la barrière brise-lames (C) soit à une certaine distance, parallèlement à cette même barrière brise-lames.

4. Dispositif selon la revendication 1, **caractérisé en ce que** le réservoir est en position isolée pour protéger la côte, parallèlement et à distance de la côte.

5. Dispositif selon l'une quelconque des revendications précédentes, **caractérisé en ce que** lesdits moyens (8) capables de capter l'eau des vagues qui se brisent dessus, permettant ainsi son entrée et empêchant sa sortie, comprend des vannes registres mobiles (8) articulées en partie haute.

6. Dispositif selon la revendication 5, **caractérisé en ce que** chaque vanne registre mobile (9) ouvre automatiquement le passage correspondant (7) sous l'effet de l'action de l'eau des vagues qui arrive et referme automatiquement le passage correspondant (7) sous l'effet de son propre poids et de l'action de l'eau qui tend à s'échapper par le passage.

7. Dispositif selon les revendications 5 ou 6, **caractérisé en ce que** les passages (7) sont réalisés sur des panneaux indépendants ( 16) sur lesquels les vannes registres mobiles (8) obturant lesdits passages (7) sont articulées.

8. Dispositif selon l'une quelconque des revendications précédentes, **caractérisé en ce que** les panneaux (16) sur lesquels sont articulés lesdits moyens (8) capables de capter l'eau des vagues qui se brisent dessus, permettant ainsi son entrée dans le réservoir (1) et empêchant sa sortie, sont mobiles et restreints sur la structure de soutien du réservoir (1) au moyen de guides (6) pour diriger le mouvement lorsque ces mêmes panneaux sont levés.

9. Dispositif selon l'une quelconque des revendications précédentes, **caractérisé en ce que** la paroi longitudinale du réservoir non exposée aux vagues diverge vers le haut par rapport à la paroi de captage, selon un profil linéaire ou curviligne.
